# FASCICULE DE BREVET EUROPEEN

(11) **EP 1 476 358 B1**
(45) Date de publication et mention de la délivrance du brevet: **22.08.2007**
(21) Numéro de dépôt: 03722660.2
(22) Date de dépôt: 18.02.2003
(51) Int. Cl.: B65B 1/00

(54) **PROCEDE DE DOSAGE ET DE DISTRIBUTION D'UN AGENT PULVERULENT.**
VERFAHREN ZUR DOSIERTEN ABGABE VON PULVERFÖRMIGEN MITTEL
METHOD OF DOSING AND DISPENSING A POWDER AGENT

(30) Priorité: 18.02.2002 FR 0201991
(43) Date de publication de la demande: 17.11.2004
(73) Titulaire: Brochot S.A., 93297 Tremblay en France (FR)
(72) Inventeur: BROWN, Joseph, Owensboro, KY 42301-681 (US); BRINKSNEADER, Wayt, Tell City, IN 47586 (US); WIMPELBERG, Bill, Owensboro, KY 42303 (US)
(74) Mandataire: Barbin le Bourhis, Joël
(86) Numéro de dépôt international: PCT/FR2003/000522
(87) Numéro de publication internationale: WO 2003/070572

(56) Documents cités:
- AT-B- 232 919
- AT-B- 296 151
- AT-B- 303 611
- DE-C- 838 125
- FR-A- 1 013 319
- US-A- 4 002 372

## Description

La présente invention concerne un procédé et un dispositif pour distribuer de manière contrôlée un agent pulvérulent destiné notamment à une réaction électrochimique.

Par exemple, dans les cuves modernes d'électrolyse pour la production d'aluminium, il est connu que l'appoint d'alumine ou d'alumine fluorée doit être réalisé de manière contrôlée en quantité et dans le temps, afin d'obtenir les meilleurs rendements énergétiques possibles. La solution la plus utilisée consiste à utiliser un ensemble doseur pourvu d'une trémie qui se remplit en position de repos et se vide dans la cuve lorsque le doseur est activé, permettant de délivrer une dose prédéterminée au moment opportun. Le moteur de ce mécanisme, qu'il soit pneumatique ou électrique, est exposé à la chaleur dégagée par les cuves et travaille dans un milieu très poussiéreux du fait de la présence d'alumine finement divisée. Ces éléments mécaniques en mouvement sont donc soumis à une usure prématurée et à des pannes par coincement en raison de la nature même du produit délivré et de sa forme et sont, de plus, difficilement réglables, ce qui rend difficile l'optimisation de la réaction électrochimique.

La présente invention a pour objet de remédier aux problèmes techniques mentionnés ci-dessus, en proposant un procédé de distribution et un dispositif associé ne comportant aucune pièce mécanique en mouvement, et permettant de faire varier la dose distribuée de manière facilement ajustable.

Par ailleurs, US 4,002,372 décrit un système d'entraînement de produit pulvérulent dans un conduit où un talus est formé dans ledit conduit et où le produit est entraîné par de l'air dirigé vers la pente du talus.

Un objet de l'invention est un procédé de dosage et de distribution d'un agent pulvérulent destiné à une réaction électrochimique, dans lequel on alimente par le haut une trémie verticale de stockage dudit produit et on effectue son extraction par le bas, caractérisé en ce qu'on procède à l'extraction via un agencement définissant une chicane pour l'écoulement gravitaire, faisant saillie dans ladite trémie de façon que l'orifice d'éjection de ladite trémie soit obturé au repos par un bouchon dudit agent pulvérulent et en ce qu'on dégage ledit agent pulvérulent vers l'extérieur, conjointement par écoulement gravitaire et par un entraînement forcé de la couche inférieure dudit bouchon grâce à un fluide gazeux en mouvement dans le sens de l'écoulement.

La chicane peut être formée par le prolongement intérieur d'une conduite d'évacuation.

Selon une caractéristique avantageuse, on stoppe la distribution après délivrance d'une dose dudit agent par arrêt du flux gazeux en formant un talus de poudre dans ladite conduite.

De cette façon, à l'arrêt de la distribution, l'orifice d'éjection de la trémie est obturé par un bouchon formé du dépôt de l'agent pulvérulent lui-même, puis ce barrage naturel est dégagé en entraînant la couche inférieure de produit grâce à un fluide en mouvement dans le sens de l'écoulement.

Selon une autre caractéristique, la pente du talus est comprise entre 30° et 35° et le débit de gaz est réglé entre 80 et 100 l/mn dans des conditions normales de pression et de température.

Selon une variante, on oriente le flux gazeux de telle sorte qu'il soit rasant à la surface inférieure de ladite conduite et sensiblement parallèle à son axe.

De préférence, le gaz est de l'air comprimé.

Un autre objet de l'invention est un dispositif pour le dosage et la distribution d'un agent pulvérulent dans un réacteur électrochimique du type comprenant une trémie verticale de stockage débouchant à sa partie inférieure dans ledit réacteur, caractérisé en ce qu'il comprend, d'une part, une chicane pour l'écoulement gravitaire dudit agent, qui fait saillie dans le fond de ladite trémie en sorte que l'orifice de celle-ci soit obturé au repos par un bouchon dudit agent pulvérulent et, d'autre part, au moins un injecteur susceptible de produire un flux gazeux d'entraînement dudit agent pulvérulent dirigé vers la couche inférieure dudit bouchon dans le sens de l'écoulement, vers l'extérieur.

La chicane peut être combinée avec un prolongement interne de la conduite d'évacuation.

Selon une caractéristique avantageuse, ledit injecteur est monté sur le fond de la trémie et/ou sur la paroi inférieure de ladite conduite.

Selon une variante, ladite conduite n'est délimitée que par une paroi supérieure et une paroi inférieure.

Selon un mode de réalisation spécifique, la longueur de ladite conduite est comprise entre 70 et 80 mm, sa largeur est comprise entre 27 et 40 mm et sa hauteur est d'au moins 27 mm.

De préférence, la largeur de ladite conduite est comprise entre 35 et 40 mm.

Le procédé de l'invention est simple et rapide et peut donc être facilement automatisé puisque le dosage dépend principalement du temps et du débit de gaz d'entraînement.

En outre, le dispositif de l'invention est particulièrement fiable, car il ne comprend aucun élément mécanique complexe et les risques de panne sont donc très faibles.

Par ailleurs, la présence d'un talus de poudre dans la conduite, entre deux opérations de dosage, assure un état stable du dispositif et sans distribution parasite ou incontrôlée.

La présente invention sera mieux comprise à la lecture de la description qui va suivre en référence aux dessins sur lesquels :
- la figure 1 représente une vue schématique en coupe d'un mode de réalisation du dispositif de l'invention en position d'arrêt ;
- la figure 2 représente une vue en coupe du dispositif de la figure 1 en phase de distribution.

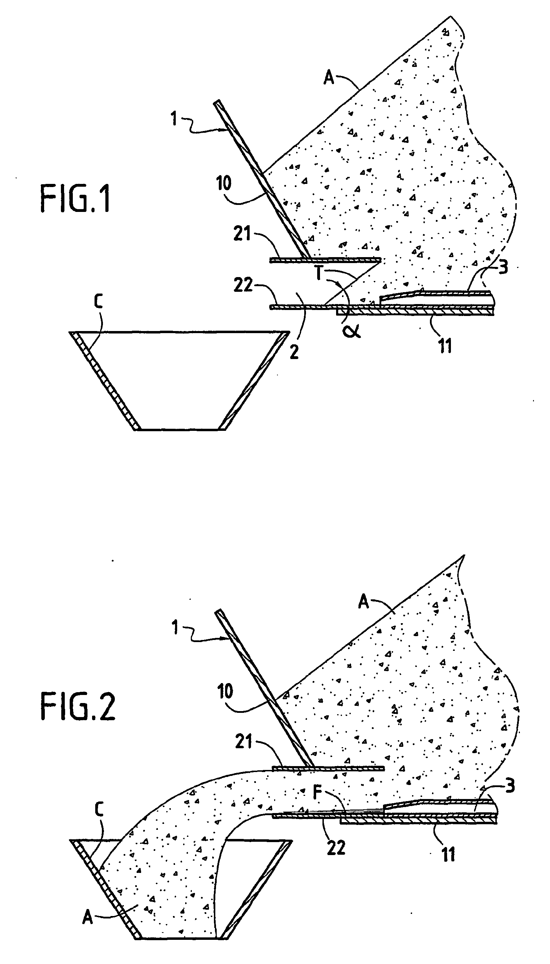

Le dispositif représenté sur les figures 1 et 2 est destiné au dosage et à la distribution d'un agent pulvérulent A dans un réacteur électrochimique tel qu'une cuve d'électrolyse C.

Ce dispositif comprend une trémie de stockage 1 disposée verticalement au-dessus de la cuve C comme représentée en vue partielle sur la figure 1 où sa paroi latérale 10 est légèrement inclinée pour faciliter l'écoulement gravitaire.

Au fond de la trémie, près de la sortie une chicane vis-à-vis de l'écoulement gravitaire est prévue pour provoquer au repos la formation d'un talus.

La trémie 1 est ouverte à sa partie supérieure et débouche à sa partie inférieure à l'extérieur et dans la cuve via une conduite horizontale d'évacuation 2. La conduite 2 fait saillie dans le fond 11 de la trémie 1 et, le cas échéant, en direction de la cuve, à l'extérieur et forme la chicane vis-à-vis de l'écoulement gravitaire du produit A.

Le dispositif comprend, en outre, au moins un injecteur 3 susceptible de produire, à l'intérieur de la conduite 2, un flux gazeux d'entraînement F pour l'agent en poudre A vers l'extérieur comme représenté sur la figure 2. Le gaz utilisé est de préférence de l'air comprimé ou un gaz neutre. La conduite 2 peut n'être délimitée, au moins dans la trémie 1, que par une paroi supérieure 21 limitant le débit de l'agent A par le haut et une paroi inférieure 22 pour le dépôt naturel de l'agent dans le bas.

Selon une variante non représentée, la conduite 2 présente une section quelconque et peut être fermée latéralement par deux parois assurant l'étanchéité complète de la trémie 1.

L'injecteur 3 est monté sur le fond 11 de la trémie 1 et/ou sur la paroi inférieure 22 de la conduite 2, de telle sorte que le flux gazeux F soit rasant à la surface inférieure de ladite conduite et sensiblement parallèle à son axe longitudinal. L'extraction de l'agent A s'effectue donc sur la quasi-totalité de la section de la conduite d'évacuation 2.

On alimente la trémie 1 en agent pulvérulent A par le haut et, en phase de distribution (figure 2), on effectue son extraction par le bas via la conduite d'éjection 2 en utilisant conjointement la gravité et l'effet d'entraînement forcé vers l'extérieur obtenu au moyen du flux gazeux F agissant comme véhicule de la poudre A à l'intérieur de la conduite 2. Le débit de gaz est de préférence compris entre 80 et 100 l/mn dans les conditions normales de pression et de température et pour une granulométrie de poudre inférieure à 6 mm.

Lorsque l'agent A est de l'alumine dont la densité apparente est de 1,1 et le débit d'air comprimé de 90 l/mn, le débit de matière pulvérulente est alors de 450 g/s.

On stoppe la distribution de l'agent pulvérulent A, après délivrance d'une dose prédéterminée, par arrêt du flux gazeux F injecté. L'arrêt de l'injection provoque alors l'immobilisation et la décantation de la poudre A et la formation naturelle, dans la conduite, d'un talus T dont la pente α est comprise entre 30 et 35° pour une longueur de conduite 2 comprise entre 70 et 80 mm, une largeur comprise entre 27 et 40 mm et de préférence entre 35 et 40 mm et une hauteur d'au moins 27 mm.

La géométrie de la conduite est telle que cette pente α rejoint d'un côté, dans la trémie 1, le bord amont de la paroi supérieure 21 sans aller de l'autre côté jusqu'au bord aval de la paroi inférieure 22 comme représenté sur la figure 1.

La section de la conduite est soit rectangulaire, soit carrée. Une conduite cylindrique peut également convenir à condition que son diamètre respecte les plages de dimensions mentionnées ci-dessus.

La longueur de la paroi inférieure 22 sera dimensionnée pour obtenir la pente de talus naturel T la plus faible en tenant compte de la tolérance de réalisation économiquement acceptable et d'une marge de sécurité compensant les facteurs extérieurs à effet d'entraînement parasite tels que les vibrations.

Lorsque la base du talus naturel T précédemment formé par le produit A se trouve emportée par le flux gazeux F réactivé, le produit s'écoule à nouveau et se trouve à son tour entraîné dans la conduite et vers l'extérieur par le flux F. Pour optimiser l'entraînement, l'injecteur d'air délivre de préférence un flux aussi plat et large que possible. Pour une granulométrie et une plage de pression d'air dans l'injecteur déterminées le débit gazeux est stable et le dosage s'effectue donc par le contrôle du temps d'injection du gaz qui est un paramètre ajustable à partir de moyens extérieurs au dispositif. Lorsque le flux gazeux est stoppé à nouveau, le talus naturel T du produit A se reforme, puis l'écoulement naturel du produit s'arrête comme décrit précédemment.

## Revendications

1. Procédé de dosage et de distribution d'un agent pulvérulent (A) destiné à une réaction électrochimique, dans lequel on alimente par le haut une trémie verticale de stockage (1) dudit produit (A) et on effectue son extraction par le bas, **caractérisé en ce qu'**on procède à l'extraction via un agencement (2) définissant une chicane pour l'écoulement gravitaire, faisant saillie dans ladite trémie de façon que l'orifice d'éjection de ladite trémie soit obturé au repos par un bouchon dudit agent pulvérulent et **en ce qu'**on dégage ledit agent pulvérulent vers l'extérieur, conjointement par écoulement gravitaire et par un entraînement forcé de la couche inférieure dudit bouchon grâce à un fluide gazeux en mouvement dans le sens de l'écoulement.

2. Procédé selon la revendication 1, **caractérisé en ce que** ledit agencement définissant une chicane est une conduite d'évacuation (2) se prolongeant à l'intérieur de la trémie.

3. Procédé selon la revendication 2, **caractérisé en ce qu'**on stoppe la distribution après délivrance d'une dose dudit agent (A) par arrêt du flux gazeux (F) en formant un talus (T) de poudre dans ladite conduite (2).

4. Procédé selon la revendication 2 ou 3, **caractérisé en ce que** la pente (α) du talus (T) est comprise entre 30° et 35°.

5. Procédé selon l'une des revendications précédentes, **caractérisé en ce qu'**on règle le débit de gaz entre 80 et 100 l/mn.

6. Procédé selon l'une des revendications 2 à 5, **caractérisé en ce qu'**on oriente le flux gazeux (F) de telle sorte qu'il soit rasant à la surface inférieure de ladite conduite (2) et sensiblement parallèle à son axe.

7. Procédé selon l'une des revendications précédentes, **caractérisé en ce que** le gaz est de l'air comprimé.

8. Dispositif pour le dosage et la distribution d'un agent pulvérulent (A) dans un réacteur électrochimique (C) du type comprenant une trémie verticale de stockage (1) débouchant à sa partie inférieure dans ledit réacteur (C), **caractérisé en ce qu'**il comprend, d'une part, une chicane pour l'écoulement gravitaire dudit agent, qui fait saillie dans le fond (11) de ladite trémie (1) en sorte que l'orifice de celle-ci soit obturé au repos par un bouchon dudit agent pulvérulent et, d'autre part, au moins un injecteur (3) susceptible de produire un flux gazeux d'entraînement (F) dudit agent pulvérulent dirigé vers la couche inférieure dudit bouchon dans le sens de l'écoulement, vers l'extérieur.

9. Dispositif selon la revendication 8, **caractérisé en ce que** ladite chicane est constituée par un prolongement interne d'une conduite d'évacuation.

10. Dispositif selon la revendication 9, **caractérisé en ce que** ledit injecteur (3) est monté sur le fond (11) de la trémie (1) et/ou sur la paroi inférieure (22) de ladite conduite (2).

11. Dispositif selon la revendication 9, **caractérisé en ce que** ladite conduite (2) n'est délimitée que par une paroi supérieure (21) et une paroi inférieure (22).

12. Dispositif selon la revendication 9, **caractérisé en ce que** la longueur de ladite conduite est comprise entre 70 et 80 mm, sa largeur est comprise entre 27 et 40 mm et sa hauteur est d'au moins 27 mm.

## Claims

1. Method of metering and dispensing a pulverulent agent (A) intended for an electrochemical reaction, in which said product (A) is fed into a vertical storage hopper (1) at the top and is evacuated at the bottom, **characterised in that** it is evacuated via an arrangement (2) defining a gravity flow baffle which projects into said hopper such that the ejection orifice of said hopper is blocked in the rest position by a plug of said pulverulent agent and **in that** said pulverulent agent is discharged towards the outside, using a combination of gravity flow and forced displacement of the lower layer of said plug by means of a gas stream moving in the direction of the flow.

2. Method according to Claim 1, **characterised in that** said arrangement defining a baffle is a discharge pipe (2) extending inside the hopper.

3. Method according to Claim 2, **characterised in that** the dispensing operation is terminated, after a metered quantity of said agent (A) has been delivered, by stopping the gas stream (F), thereby forming a ramp (T) of powder in said pipe (2).

4. Method according to Claim 2 or 3, **characterised in that** the slope (α) of the ramp (T) is between 30° and 35°.

5. Method according to one of the preceding claims, **characterised in that** the gas flow rate is set between 80 and 100 l/m.

6. Method according to one of Claims 2 to 5, **characterised in that** the gas stream (F) is directed such that it brushes against the lower surface of said pipe (2) and is substantially parallel to its axis.

7. Method according to one of the preceding claims, **characterised in that** the gas is compressed air.

8. Device for metering and dispensing a pulverulent agent (A) into an electrochemical reactor (C), of the type comprising a vertical storage hopper (1) which opens at its lower part into said reactor (C), **characterised in that** it comprises, on the one hand, a baffle for the gravity flow of said agent, which projects into the bottom (11) of said hopper (1) such that the orifice thereof is blocked in the rest position by a plug of said pulverulent agent, and, on the other hand, at least one injector (3) capable of producing a gas stream (F) for displacing said pulverulent agent directed towards the lower layer of said plug in the direction of the flow, towards the outside.

9. Device according to Claim 8, **characterised in that** said baffle consists of an internal continuation of a discharge pipe.

10. Device according to Claim 9, **characterised in that** said injector (3) is mounted on the bottom (11) of the hopper (1) and/or on the lower wall (22) of said pipe (2).

11. Device according to Claim 9, **characterised in that** said pipe (2) is delimited by only an upper wall (21) and a lower wall (22).

12. Device according to Claim 9, **characterised in that** the length of said pipe is between 70 and 80 mm, its width is between 27 and 40 mm and its height is at least 27 mm.

## Patentansprüche

1. Verfahren zum Dosieren und Einstreuen eines für eine elektrochemische Reaktion bestimmten pulverigen Mittels (A), bei dem ein vertikaler Trichter zur Lagerung (1) des Produktes (A) über die Oberseite beschickt wird und das Produkt über die Unterseite abgezogen wird, **dadurch gekennzeichnet, daß** das Abziehen über eine Anordnung (2) vollzogen wird, die ein Leitblech für die Schwerkraftströmung definiert, das in den genannten Trichter derart vorspringt, daß die Auswurföffnung des Trichters in Ruhe durch einen Pfropfen des pulverigen Mittels verschlossen ist und daß man das pulverige Mittel sowohl durch Schwerkraftströmung als auch durch ein gesteuertes Mitnehmen der unteren Schicht des Pfropfens dank eines sich in Richtung der Strömung bewegenden gasförmigen Fluids zur Außenseite hin entweichen läßt.

2. Verfahren nach Anspruch 1, **dadurch gekennzeichnet, daß** die ein Leitblech definierende Anordnung eine Abführleitung (2) ist, die sich innerhalb des Trichters fortsetzt.

3. Verfahren nach Anspruch 2, **dadurch gekennzeichnet, daß** das Einstreuen nach der Lieferung einer Dosis des Mittels (A) durch Anhalten des gasförmigen Stroms (F) unter Ausbildung einer Pulver-Schräge (T) in der Leitung (2) gestoppt wird.

4. Verfahren nach Anspruch 2 oder 3, **dadurch gekennzeichnet, daß** die Neigung (α) der Schräge (T) zwischen 30° und 35° liegt.

5. Verfahren nach einem der vorhergehenden Ansprüche, **dadurch gekennzeichnet, daß** die Gasdurchflußmenge auf 80 bis 100 l/mn eingestellt wird.

6. Verfahren nach einem der Ansprüche 2 bis 5, **dadurch gekennzeichnet, daß** der Gasstrom (F) derart ausgerichtet wird, daß er an der Unterseite der Leitung (2) entlang streift und im wesentlichen parallel zu deren Achse verläuft.

7. Verfahren nach einem der vorhergehenden Ansprüche, **dadurch gekennzeichnet, daß** das Gas Druckluft ist.

8. Vorrichtung für das Dosieren und Einstreuen eines pulverigen Mittels (A) in einen elektrochemischen Reaktor (C), von der Art umfassend einen vertikalen Lagerungstrichter (1), der an seinem unteren Teil in den Reaktor (C) mündet, **dadurch gekennzeichnet, daß** sie einerseits ein Leitblech für die Schwerkraftströmung des Mittels aufweist, das in den Boden (11) des Trichters (1) derart vorspringt, daß dessen Öffnung in Ruhe durch einen Pfropfen des pulverigen Mittels verschlossen ist, und andererseits wenigstens eine Einspritzdüse (3) umfaßt, die geeignet ist, einen zur unteren Schicht des Pfropfens in Richtung der Strömung gerichteten Gasstrom (F) zur Mitnahme des pulverigen Mittels zur Außenseite zu erzeugen.

9. Vorrichtung nach Anspruch 8, **dadurch gekennzeichnet, daß** das Leitblech durch eine innere Verlängerung einer Abführleitung gebildet ist.

10. Vorrichtung nach Anspruch 9, **dadurch gekennzeichnet, daß** die Einspritzdüse (3) am Boden (11) des Trichters (1) und/oder an der unteren Wand (22) der Leitung (2) angebracht ist.

11. Vorrichtung nach Anspruch 9, **dadurch gekennzeichnet, daß** die Leitung (2) lediglich durch eine obere Wand (21) und eine untere Wand (22) begrenzt ist.

12. Vorrichtung nach Anspruch 9, **dadurch gekennzeichnet, daß** die Länge der Leitung zwischen 70 und 80 mm, ihre Breite zwischen 27 und 40 mm und ihre Höhe wenigstens 27 mm beträgt.
